# EUROPEAN PATENT SPECIFICATION

(11) **EP 4 511 311 B1**
(45) Date of publication and mention of the grant of the patent: **11.03.2026**
(21) Application number: 23719913.8
(22) Date of filing: 19.04.2023
(51) Int. Cl.: B66C 23/20

(54) **HOISTING DEVICE FOR A WIND TURBINE, AND METHOD FOR INSTALLING A HOISTING DEVICE ON A WIND TURBINE**
HEBEVORRICHTUNG FÜR EINE WINDTURBINE UND VERFAHREN ZUR INSTALLATION EINER HEBEVORRICHTUNG AN EINER WINDTURBINE
DISPOSITIF DE LEVAGE POUR UNE ÉOLIENNE ET PROCÉDÉ D'INSTALLATION D'UN DISPOSITIF DE LEVAGE SUR UNE ÉOLIENNE

(30) Priority: 22.04.2022 NL 2031680
(43) Date of publication of application: 26.02.2025
(73) Proprietor: LiftWerx Solutions Inc., Cambridge, ON N1T 1N7 (CA)
(72) Inventor: VAN GRIEKEN, Gerardus Cornelius, Noordwijkerhout, 2211 LS (NL)
(74) Representative: Rasmussen, Martin Hoffgaard
(86) International application number: PCT/NL2023/050202
(87) International publication number: WO 2023/204701

(56) References cited:
- EP-A2- 1 677 007
- WO-A1-02/34664
- US-A1- 2020 071 138

## Description

### BACKGROUND

The invention relates to a hoisting device for a wind turbine, and a method for installing a hoisting device on a wind turbine.

Hoisting devices of this type are also called up-tower cranes that are installed on the nacelle of a wind turbine. The hoisting device comprises a support structure on the nacelle of the wind turbine, a pedestal on the support structure, a superstructure that is slewable with respect to the pedestal around a vertical slewing axis, a first boom assembly that has an elongate first boom that is connected to and extends from the superstructure, and a first hoist cable that is suspended from the first boom. The pedestal, the superstructure and the first boom assembly form a first hoisting crane for hoisting, amongst others, tools, equipment and wind turbine components to the nacelle of the wind turbine.

EP1677007A2 discloses a hoisting device for a wind turbine, as well as a method for installing such a device on a wind turbine, corresponding to the subject-matter of the preamble of claim 1 and of claim 11, respectively.

### SUMMARY OF THE INVENTION

In recent years wind turbines have been scaled up to increase the power generating capacity, and it is envisaged that this trend will continue in the foreseeable future. As a result the parts and the components of the wind turbines will become bigger and heavier which requires higher hoisting capacities of the hoisting device for the wind turbine.

It is an object of the present invention to provide a hoisting device for a wind turbine that has an increased hoisting capacity, and a method for installing a hoisting device on a wind turbine that has an increased hoisting capacity.

According to a first aspect, the invention provides a hoisting device for a wind turbine, wherein the hoisting device comprises a support structure to be installed on the wind turbine, a superstructure that is slewable with respect to the support structure around a vertical slewing axis, and a first boom assembly that has an elongate first boom that is connected to and extends from the superstructure, and a first hoist cable that is suspended from the first boom, wherein the superstructure and the first boom assembly form a first hoisting crane, wherein the hoisting device comprises a second boom assembly that has an elongate second boom, a second hoist cable that is suspended from the second boom, and a connecting member for transferring a force or moment between the first boom and the second boom when the connecting member is connected to the first boom and the second boom, wherein the hoisting device has a first hoisting mode in which the distal end of the first boom extends at a first side of the slewing axis, and the first hoisting crane is configured to hoist a load, or to hoist the second boom assembly into an installation position in which the second boom assembly extends at the first side of the slewing axis and is supported by the support structure, wherein the hoisting device has an installation mode in which the first hoisting crane is configured to move the distal end of the first boom to a second side of the slewing axis with respect to the second boom assembly while the second boom assembly is in its installation position, and in which the hoisting device is configured to connect the second boom assembly to the first hoisting crane while the distal end of the second boom extends at the first side of the slewing axis and the distal end of the first boom extends at the second side of the slewing axis, wherein the hoisting device has a second hoisting mode in which the second boom assembly is connected to the first hoisting crane, the distal end of the first boom and the distal end of the second boom extend at opposite sides of the slewing axis, and the connecting member is connected to the first boom and to the second boom, wherein the first hoisting crane and the second boom assembly together form a second hoisting crane.

The hoisting device according to the invention can be installed on the wind turbine requiring little to no assistance from external resources such as an external crane, for instance a mobile crane, a crawler crane or an offshore crane. To install the hoisting device the first hoist cable is connected to the second boom assembly and the first hoisting crane hoists the second boom assembly up to the nacelle of the wind turbine and positions it in its installation position in which the second boom assembly is supported on the support structure by an installation support of the second boom assembly. During the hoisting and positioning of the second boom assembly by the first hoisting crane, the first boom and the second hoisting assembly extend at the same side of the slewing axis. Next an installation support member of the hoisting device is connected to the first hoisting crane and the second boom assembly and the first hoist cable is released from the second boom assembly. At this point the second boom assembly is both supported by the support structure and supported or suspended by the installation support member. The first hoisting crane is now free to slew the first boom to the opposite side of the slewing axis with respect to the second boom assembly.

In or from its installation position the second boom assembly can be manipulated to connect the connecting member to the first boom, for instance by extending a hydraulic cylinder of the connecting member therewith moving the connecting member towards and into engagement with the first boom. In or from its installation position the second boom assembly can be manipulated to connect the base of the second boom to the superstructure, for instance by hinging a support leg of the installation support by extending a support leg cylinder of the installation support therewith hinging or moving the base of the second boom towards and into engagement with the super structure. The hoisting device is then in the second hoisting mode in which the first boom and the second boom extend at opposite sides of the slewing axis and the first hoisting crane and the second boom assembly form the second hoisting crane.

In the second hoisting mode the connecting member can transfer at least a part of the forces resulting from a lifted load from the second boom to the first boom. As a result the first boom, the second boom and/or the connecting member are subjected to favorable forces, loads and/or moments, i.e. tension forces in the connecting member and compression forces in the first boom and the second boom, as compared to moment forces in the respective booms. Due to the favorable forces and loads in the components the second hoisting crane and therewith the hoisting device can either be designed lighter or the hoisting capacity can be increased to accommodate the hoisting of heavier components.

A further advantage of the hoisting device is that both the first hoisting crane and the second hoisting crane use the same support structure or interface on the nacelle of the wind turbine, which makes using a second support structure for a second hoisting crane superfluous and therefore reduces the required footprint of the hoisting device on the nacelle. The reduced footprint is beneficial as the available space on the nacelle is limited and having less interfaces and/or hoisting cranes on the nacelle makes hoisting and moving around equipment by the hoisting device less complicated and more safe.

In an embodiment, in the second hoisting mode, the first boom and the second boom are at the proximal ends thereof connected to the superstructure, and the connecting member is respectively connected to the first boom and to the second boom at a distance from the respective proximal ends. In an embodiment the connecting member is connected to the second boom at or near the distal end thereof. These configurations are further favorable for the forces, loads and/or moments in the first boom, the second boom and/or the connecting member. Due to these further favorable forces and loads in the components the second hoisting crane and therewith the hoisting device can either be designed even lighter or the hoisting capacity can be further increased to accommodate the hoisting of heavier components.

In an embodiment the connecting member comprises a hydraulic cylinder, wherein the hydraulic cylinder is operable to, at least in the installation mode, extend the connecting member towards the first boom, and/or wherein the hydraulic cylinder is operable to, at least in the second hoisting mode, hinge the second boom with respect to the slewing axis. The hydraulic cylinder is a robust and reliable actuator to actuate a movement of the connecting member with respect the second boom and/or vice versa.

In an embodiment the hoisting device comprises an installation support member that, at least in the installation mode, is connected between the first hoisting crane and the second boom assembly to at least partly support and/or suspend the second boom assembly in its installation position. The installation support member provides support, in particular sideways support, to the second boom assembly when it is supported by the support structure. The installation support member keeps the second boom assembly in the desired position and orientation, also while the first boom is moved from the first side to the second side of the slewing axis. In an embodiment the installation support member comprises an installation support cable, and the hoisting device comprises a support cable guide that is attached to the first hoisting crane, wherein the installation support cable at one end is connected to the support cable guide and at the opposite end is connected to the second boom assembly, wherein the support cable guide is configured to, at least in the installation mode, guide the installation support cable during moving of the first boom between the first side and the second side with respect to the slewing axis. When the support cable is attached between the second boom and the first hoisting crane the second boom assembly can lean away from the first hoisting crane whereby the support cable is pulled taut. While the first boom is moved from the first side to the second side of the slewing axis the support cable is kept taut and keeps supporting the second boom assembly. The flexible cable is guided by the support cable guide during slewing of the first hoisting crane.

In an embodiment the second boom assembly comprises a support leg that at one end is connected to the second boom and that, at least in the installation mode, at the opposite end rests on the support structure to support the second boom assembly. The installation support protrudes or can be manipulated to protrude from the second boom towards the support structure so that the second boom assembly can be positioned on the support structure in a more straightforward manner. In an embodiment the second boom assembly comprises a support leg cylinder between the support leg and the second boom, wherein the support leg cylinder is operable to hinge the support leg with respect to the second boom. The installation support can be used to set the position of the second boom assembly with respect to the first hoisting crane by manipulating the orientation of the support leg with respect to the second boom by operating the support leg cylinder. In an embodiment, in the installation mode, the support leg cylinder is operable to hinge the second boom with respect to the first hoisting crane. The installation support can be used to move the second boom towards and bring in engagement with the first hoisting crane by manipulating the orientation of the support leg with respect to the second boom by operating the support leg cylinder.

In an embodiment the second boom assembly comprises a tension bar that is connected to the second boom at a distance from the connecting member, and that is connected to the connecting member at a distance from the second boom. In an embodiment, in the second hoisting mode, the tension bar is connected to the second boom near the proximal end thereof, and is connected to the connecting member near the first boom. The tension bar provides a direct load path between the connecting member and the second boom which is further favorable for the forces, loads and/or moments in the first boom, the second boom and/or the connecting member. Due to these further favorable forces and loads in the components the second hoisting crane and therewith the hoisting device can either be designed even lighter or the hoisting capacity can be further increased to accommodate the hoisting of heavier components.

In an embodiment the tension bar comprises a keyhole and the connecting member comprises a pin that extends through the keyhole to form the connection between the tension bar and the connecting member to allow the tension bar to be moved in its longitudinal direction with respect to the connecting member. Due to the keyhole-pin connection, prior to connecting the second boom and/or the tension bar of the second boom assembly to the first hoisting crane, the distal end of the rod can be aligned with the second connector. This allows for easier and more straightforward installation of the hoisting device.

In an embodiment the hoisting device comprises a first slewing bearing between the support structure and the superstructure, and a second slewing bearing between the support structure and the superstructure that is spaced apart from the first slewing bearing along the slewing axis. In an embodiment the first slewing bearing is configured to transfer radial loads between the support structure and the superstructure, and the second slewing bearing is configured to transfer radial loads and axial loads between the support structure and the superstructure. This configuration of the slewing bearings reduces the size of the slewing bearings and the related structural components as compared to using a conventional single slewing bearing. The reduced size results in a smaller footprint of the hoisting device. The reduced footprint is beneficial as the available space on the nacelle is limited and having a smaller footprint on the nacelle makes hoisting and moving around equipment by the hoisting device less complicated and more safe.

In an embodiment the first hoisting crane has a first maximum hoist capacity and the second hoisting crane has a second maximum hoist capacity that is higher than the first maximum hoist capacity. In an embodiment the first maximum hoist capacity is in the range of twenty to forty tons, more specifically in the range of twenty five to thirty five tons. In an embodiment the second maximum hoist capacity is in the range of fifty to two hundred tons, more specifically in the range of seventy to hundred fifty tons.

In an embodiment the second boom assembly comprises a rod that is hingeably connected to the second boom, wherein in the second hoisting mode the second boom is connected to the first hoisting crane by the rod. The hinged connection of the rod and the second boom decouples the transfer of horizontal compression force from the tension bar to the first slewing bearing and vertical tension force from the tension bar to the superstructure. The rod allows to align the tension bar with the second slewing bearing to prevent the introduction of additional moment forces in the first boom. Due to these further favorable forces and loads in the components the second hoisting crane and therewith the hoisting device can either be designed even lighter or the hoisting capacity can be further increased to accommodate the hoisting of heavier components. Prior to connecting the rod to the first hoisting crane, the rod can be hinged with respect to the second boom to align the distal end of the rod with the first hoisting crane. This allows for easier and more straightforward installation of the hoisting device.

According to a second aspect, the invention provides a method for installing a hoisting device on a wind turbine, wherein the hoisting device comprises a support structure to be installed on the wind turbine, a superstructure that is slewable with respect to the support structure around a vertical slewing axis, and a first boom assembly that has an elongate first boom that is connected to and extends from the superstructure, and a first hoist cable that is suspended from the first boom, wherein the superstructure and the first boom assembly form a first hoisting crane, wherein the hoisting device comprises a second boom assembly that has an elongate second boom, a second hoist cable that is suspended from the second boom, and a connecting member for transferring a force or moment between the first boom and the second boom when the connecting member is connected to the first boom and the second boom, wherein the method comprises the steps of: by the first hoisting crane, while the distal end of the first boom extends at a first side of the slewing axis, hoisting the second boom assembly into an installation position in which the second boom assembly extends at the first side of the slewing axis and is supported by the support structure, by the first hoisting crane, moving the distal end of the first boom to a second side of the slewing axis with respect to the second boom assembly while the second boom assembly is or remains in its installation position, connecting the second boom assembly to the first hoisting crane at the first side of the slewing axis while the distal end of the second boom extends at the first side of the slewing axis and the distal end of the first boom extends at the second side of the slewing axis, to form a second hoisting crane that comprises the first hoisting crane and the second boom assembly, and wherein the distal end of the first boom and the distal end of the second boom extend at opposite sides of the slewing axis, and the connecting member is connected to the first boom and to the second boom.

The method relates to the hoisting device according to any one of the aforementioned embodiments and thus has at least the same technical advantages, which will not be repeated hereafter.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 is a side view of a wind turbine with a hoisting device according to an embodiment of the invention;
Figures 2A-2F are side views of respective steps of a method for installing the hoisting device of figure 1 according to an embodiment of the invention; and
Figure 3 is a side view of a hoisting device according to an alternative embodiment of the invention.

### DETAILED DESCRIPTION OF THE INVENTION

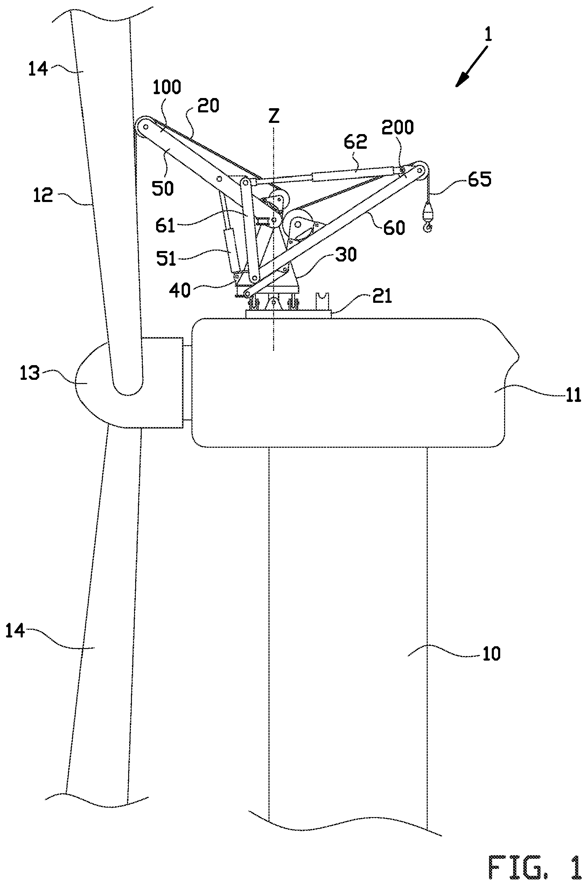

Figure 1 shows a side view of a part of a wind turbine 1 that comprises a tower 10 an a not shown foundation, a nacelle 11 on the tower 10, and a rotor 12 with a hub 13 and blades 14 on the nacelle 11. The wind turbine 1 comprises an up-tower crane or hoisting device 20 according to an embodiment of the invention, that is arranged on the wind turbine 1, more specifically on the nacelle 11 of the wind turbine 1. The wind turbine 1 may be a land based, a bottom founded offshore or a floating offshore wind turbine 1.

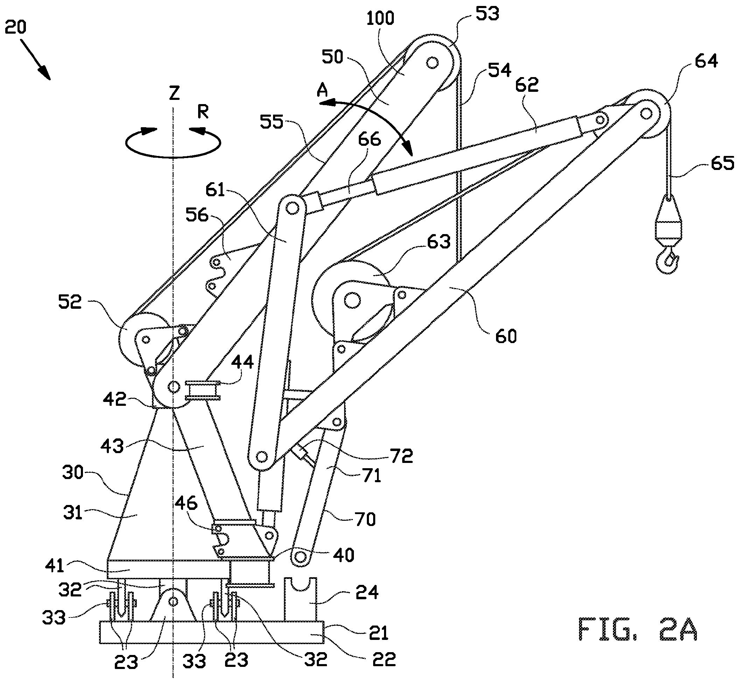

As best shown in figures 2A-2F, the hoisting device 20 comprises a steel support structure 21 that has a support body 22, multiple pairs of support padeyes 23 that project upwards from the support body 22, and an installation footing 24 that projects upwards from the support body 22 and that is spaced apart from the support padeyes 23. The support structure 21 forms an interface with the nacelle 11 of the wind turbine 1 that transfers the loads of the hoisting device 20 to the nacelle 11. The support structure 21 can be designed to match the structural specifics of the nacelle 11 the hoisting crane is installed on. Alternatively the support structure 21 may be part of or integral with the nacelle 11 of the wind turbine 1.

The hoisting device 20 comprises a steel pedestal 30 that has a cone shaped main body 31, pedestal padeyes 32 that project downwards from the wide base of the main body 31 and that match with and extend between the corresponding support padeyes 23, and pedestal pins 33 that extend through the respective pedestal padeyes 32 and support padeyes 23 to form a connection between the support structure 21 and the pedestal 30.

The hoisting device 20 comprises a steel superstructure 40 that is rotatable or slewable supported by the pedestal 30 to be rotatable or slewable with respect to the pedestal 30 around a vertical slewing axis Z in a rotation or slewing direction R. The superstructure 40 comprises in this example a ring shaped first support frame 41 that surrounds the cone shaped main body 31 at or near the wide base thereof, a ring shaped second support frame 42 that surrounds the cone shaped main body 31 at or near the smaller top thereof, and a connecting member 43 that extends between the first support frame 41 and the second support frame 42 substantially parallel to the outer surface of the main body 31 of the pedestal 30.

The hoisting device 20 comprises a not shown first slewing bearing between the first support frame 41 and the main body 31, for transferring radial or horizontal loads between the pedestal 30 and the superstructure 40, and a not shown second slewing bearing between the second support frame 42 and the main body 31, for transferring radial or horizontal loads and axial or vertical loads between the pedestal 30 and the superstructure 40. The first and second slewing bearings are spaced apart from each other along the slewing axis Z. The first and second slewing bearings between the respective support frames 41, 42 and the pedestal 30 rotatably connect the superstructure 40 with the pedestal 30 whereby the superstructure 40 is slewable with respect to the pedestal 30 around the slewing axis Z in the slewing direction R.

The hoisting device 20 comprises a support cable guide 44 that is attached to the connecting member 43 of the superstructure 40 near the second support frame 42 thereof. The support cable guide 44 is a U-shaped steel profile that extends over a portion of a circle around the slewing axis Z of the hoisting device 20, in this example over substantially half a circle around the slewing axis Z in a substantially horizontal plane. The U-shaped cross section of the support cable guide 44 provides a groove that faces away from the superstructure 40 and that can accommodate a cable along the length of the support cable guide 44.

The hoisting device 20 comprises a first boom assembly 55 that has an elongate first boom 50 that at its proximal end is hingeably connected to the connecting member 43 of the superstructure 40 near the second support frame 42, and a first boom linear actuator or first boom cylinder 51 that at one end is hingeably connected to the connecting member 43 of the superstructure 40 near the first support frame 41 and at the opposite end is hingeably connected to the first boom 50. The first boom cylinder 51 is operable to hinge the first boom 50 with respect to the superstructure 40 in a first boom hinge direction A. The first boom assembly 55 of the hoisting device 20 comprises a first winch 52 that is attached to the first boom 50 near the proximal end thereof, a first hoist sheave 53 that is rotatably connected to the opposite distal end of the first boom 50, and a first hoist cable 54 that is operably connected to the first winch 52 and that extends along the first boom 50 and is guided by the first hoist sheave 53. The pedestal 30, the superstructure 40 and the first boom assembly 50 functionally form a first hoisting crane 100 that is operable to hoist loads, on its own.

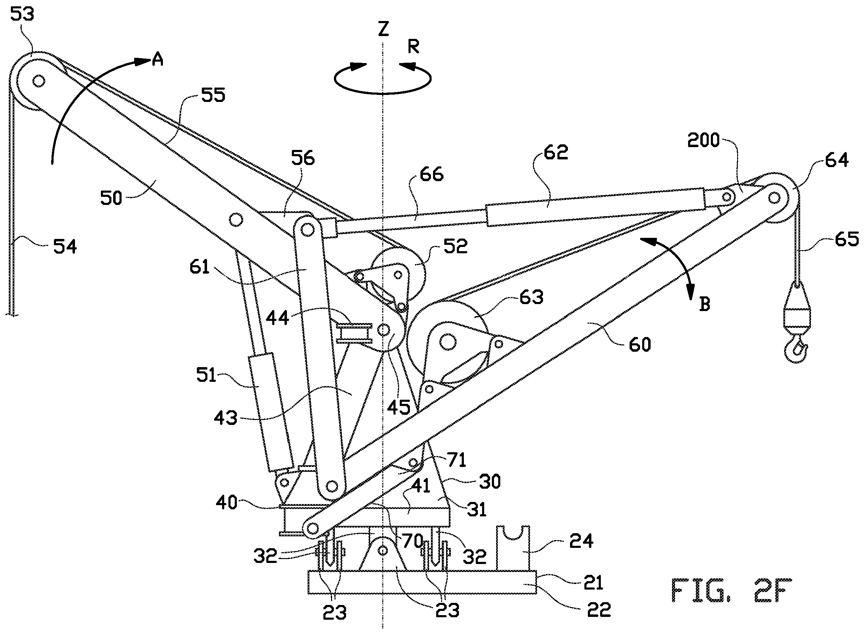

The hoisting device 20 comprises a second boom assembly 66 that in a first mode of the hoisting device 20 is separate from the first hoisting crane 100, as shown in figure 2A, and in a second mode of the hoisting device 20 is connected to or integral with the first hoisting crane 100, as shown in figure 2F, to functionally form a second hoisting crane 200. The second boom assembly 66 comprises an elongate second boom 60, a tension bar 61 that at one end is hingeably connected to the proximal end of the second boom 60, and a connecting member that comprises a second boom cylinder 62 that at one end is hingeably connected to the distal end of the second boom 60 and at its opposite end is hingeably connected to the opposite distal end of the tension bar 61. The second boom assembly 66 has a substantially triangular configuration. The second boom cylinder 62 is operable to hinge the second boom 60 with respect to the tension bar 61 in a second boom hinge direction B, thereby hinging the second boom 60 with respect to the slewing axis z.

The hoisting device 20 comprises a first connector 56 for the second boom assembly at the first boom 50 of the first boom assembly 55, in this example near the middle of the first boom 50 near the location where the first boom cylinder 51 is connected to the first boom 50. The tension bar 61 and/or the second boom cylinder 62 of the second boom assembly 66 are, at or near the location at which they are connected to each other, hingeably connectable or connected to the first connector 56 at the first boom 50. In this example the first connector 56 comprises a slot for receiving a pin of the tension bar 61 and/or the second boom cylinder 62.

The hoisting device 20 comprises a second connector 46 for the second boom assembly at the connecting member 43 of the superstructure 40, in this example near the first support frame 41 of the superstructure 40. The second boom 60 and/or the tension bar 61 of the second boom assembly 66 are, at or near the location at which they are connected to each other, hingeably connectable or connected to the second connector 46 at the superstructure 40. In this example the second connector 46 comprises a slot for receiving a pin of the second boom 60 and/or the tension bar 61.

The second boom assembly 66 of the hoisting device 20 comprises a second winch 63 that is attached to the second boom 60 near the middle thereof, a second hoist sheave 64 that is rotatably connected to the opposite distal end of the second boom 60, and a second hoist cable 65 that is operably connected to the second winch 63 and that extends along the second boom 60 and is guided by the second hoist sheave 64. Optionally, the first winch 52 and the first hoist cable 54 can be used to form the second winch 63 and the second hoist cable 65 of the second boom assembly 66.

The second boom assembly 66 of the hoisting device 20 comprises a boom support 70 that has an elongate support leg 71 that at one end is hingeably connected to the second boom 60 and that at its opposite distal end matches with and is insertable in or connectable to the installation footing 24 of the support structure 21. The boom support 70 has a support leg linear actuator or support leg cylinder 72 that at one end is hingeably connected to the second boom 60 and at its opposite end is hingeably connected to the support leg 71. The support leg cylinder 72 is operable to hinge the support leg 71 with respect to the first boom 50 in a support leg hinge direction C.

As best shown in figure 2A in the first mode the hoisting device 20 is configured to hoist a load using the first hoisting crane 100, in particular using the first boom assembly 55. In particular in the first mode the first hoisting crane 100 of the hoisting device 20 is configured to hoist the second boom assembly 66 using the first hoist cable 54 that is suspended from the first boom 50. In the first mode the configuration of the hoisting device 20, more specifically of the first boom assembly 55, is such that due to the lifted load the first boom 50 is subjected to a bending moment, and the first boom cylinder 51 is subjected to a compression force. The first boom 50 exerts a tension force to the second support frame 42 of the superstructure 40 and the first boom cylinder 51 exerts a horizontal compression force to the first support frame 41 of the superstructure 40 and a vertical tension force to the connecting member 43 of the superstructure 40.

In the first mode the first hoisting crane 100 of the hoisting device 20 has a first maximum hoisting capacity that is adequate to hoist the second boom assembly 66. The first hoist capacity is in the range of twenty to forty tons, more specifically in the range of twenty five to thirty five tons.

As best shown in figure 2F, in the second mode the hoisting device 20 is configured to hoist a load using the second hoisting crane 200, in particular in the second mode the hoisting device 20 is configured to hoist the load using the second boom assembly 66, more in particular in the second mode the hoisting device 20 is configured to hoist the load using the second hoist cable 65 that is suspended from the second boom 60. In the second mode the configuration of the hoisting device, more specifically of the first boom assembly 55 and the second boom assembly 66, is such that due to the lifted load the second boom 50 is subjected to a compression force, the second boom cylinder 62 is subjected to a tension force, and the tension bar 61 is subjected to a tension force. The second boom assembly 66 exerts compression force to the first boom 50 which transfers the compression force to the second support frame 42 of the superstructure 40, and the second boom 60 exerts a compression force to the first support frame 41 of the superstructure 40.

In the second mode the hoisting device 20 has a second maximum hoisting capacity that is higher than the first maximum hoist capacity, and that is in the range of fifty to two hundred tons, more specifically in the range of seventy to hundred fifty tons.

Figures 2A-2F show the steps of a method for assembling the hoisting device 20 on the wind turbine 1 according to an embodiment of the invention. Figure 2A shows the hoisting device 20 in its first mode in which the second boom assembly 66 is not connected to the first hoisting crane 100 of the hoisting device 20. Prior to connecting the second boom assembly 66 to the hoisting device 20 the hoisting device 20 is assembled on the nacelle 11 of the wind turbine 1. Assembling the hoisting device 20 up to the first mode thereof can be performed by a not shown hoisting crane or hoisting device. This hoisting device may be a permanent hoisting crane of the nacelle 1 or a temporary hoisting crane that is assembled on the nacelle 1. Such a hoisting crane has a hoisting capacity that is greater than the weight of the heaviest component of the hoisting device 20 which is in the range of one to five tons, more specifically about 3 tons. The assembly of the hoisting device 20 into its first mode is performed by subsequently hoisting and installing the support structure 21 onto the nacelle 11, the pedestal 30 onto the support structure 21, the superstructure 40 onto the pedestal 30, and the first boom assembly 55 onto the superstructure 40. Alternatively the hoisting device 20, in its first mode, is hoisted and installed onto the nacelle 11 in its entirety by an external hoisting crane such as a mobile crane, a crawler crane or an offshore crane.

To assemble the hoisting device 20 into its second mode the first hoist cable 54 is connected to the second boom assembly 66 and the hoisting device 20 hoists the second boom assembly 66 by pulling in the first hoist cable 54 by the first winch 52 until the second boom assembly 66 is suspended from the first boom 50. Subsequently the second boom assembly 66 is raised by further pulling in the first hoist cable 54, to an elevation in which the distal end of the support leg 71 of the boom support 70 is higher than the installation footing 24 of the support structure 21. Then the distal end of the support leg 71 is positioned above the installation footing 24 by rotating the superstructure 40 and therewith the first boom 50 with respect to the pedestal 30 around the slewing axis Z and by hinging the first boom 50 in the first boom hinge direction A towards the slewing axis Z.

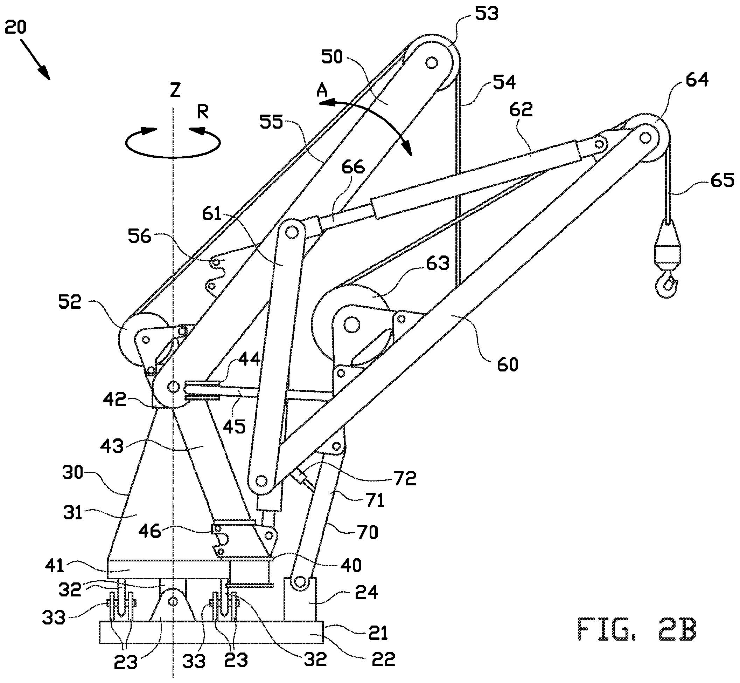

As best shown in figure 2B, the second boom assembly 66 is subsequently lowered by paying out the first hoist cable 54 by the first winch 52 until the distal end of the support leg 71 of the second boom assembly 66 mates with the installation footing 24 of the support structure 21 of the hoisting device 20. At this point the second boom assembly 66 is both supported by the installation footing 24 and suspended from the second boom assembly 66, and at least the distal end of the first boom 50 of the first boom assembly 55 and at least the distal end of the second boom 60 of the second boom assembly 66 are positioned at the same side of the slewing axis Z and are substantially aligned in the same vertical plane. Subsequently an installation support cable 45 of an installation support member is connected between the second boom assembly 66 and the first hoisting crane 100 of the hoisting device 20, in particular between the second boom 50 and the support cable guide 44 of the superstructure 40, more in particular to or near one end of the support cable guide 44. The installation support cable 45 can be connected to the second boom assembly 66 and the superstructure 40 via conventional cable connecting means such as a shackle or alternatively by a winch that is connected to the second boom assembly 66 and/or to the superstructure 40.

Subsequently, the first hoist cable 54 is further paid out by the first winch 52 until the installation support cable 45 is taught and suspends or supports the second boom assembly 66, and the first hoist cable 54 is disconnected from the second boom 50 of the second boom assembly 66. At this point the second boom assembly 66 is both supported by the installation footing 24 and supported or suspended by the installation support cable 45, and at least the distal end of the first boom 50 of the first boom assembly 55 and at least the distal end of the second boom 60 of the second boom assembly 66 are positioned at the same side of the slewing axis Z and are substantially aligned in the same vertical plane. The installation support cable 45 is aligned with the support cable guide 44 in a substantially horizontal orientation. When the installation support cable 45 is connected by a winch it can be used to adjust the length of the installation support cable 45 between the second boom assembly 66 and the superstructure 40 to control the orientation of the second boom assembly 66 with respect to the superstructure 40.

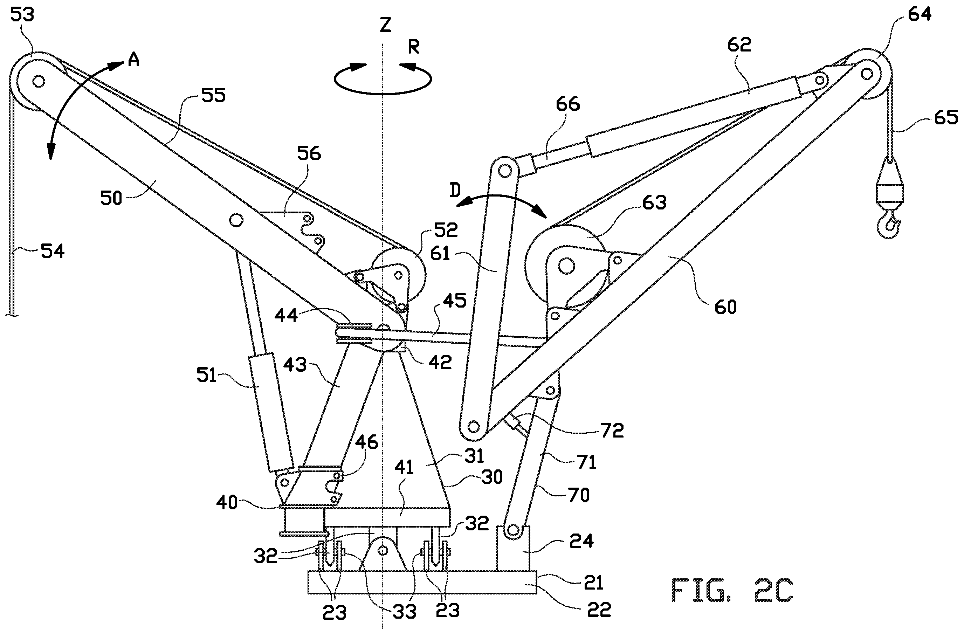

As best shown in figure 2C, the superstructure 40 is then slewed over substantially 180 degrees with respect to the pedestal 30 until at least the distal end of the first boom 50 of the first boom assembly 55 and at least the distal end of the second boom 60 of the second boom assembly 66 are positioned at opposite sides of the slewing axis Z and are substantially aligned in the same vertical plane. During slewing of the superstructure 40 the end of the installation support cable 45 that is connected thereto is pulled along with the superstructure 40 and at least a part of the installation support cable 45 is guided along and into the groove of the U-shaped support cable guide 44. During slewing of the superstructure 40 the installation support cable 45 remains supporting or suspending the second boom assembly 66. Due to the slewing of the superstructure 40 the length of the installation support cable 45 between the superstructure 40 and the second boom assembly 66 becomes smaller or larger, depending on roll off or roll on during slewing, and as a result the second boom assembly 66 is pulled towards or paid out away from the superstructure 40 into a more upright or less upright orientation thereof. The winch of the installation support cable 45 can be used to control the orientation of the second boom assembly 66 during slewing of the superstructure 40.

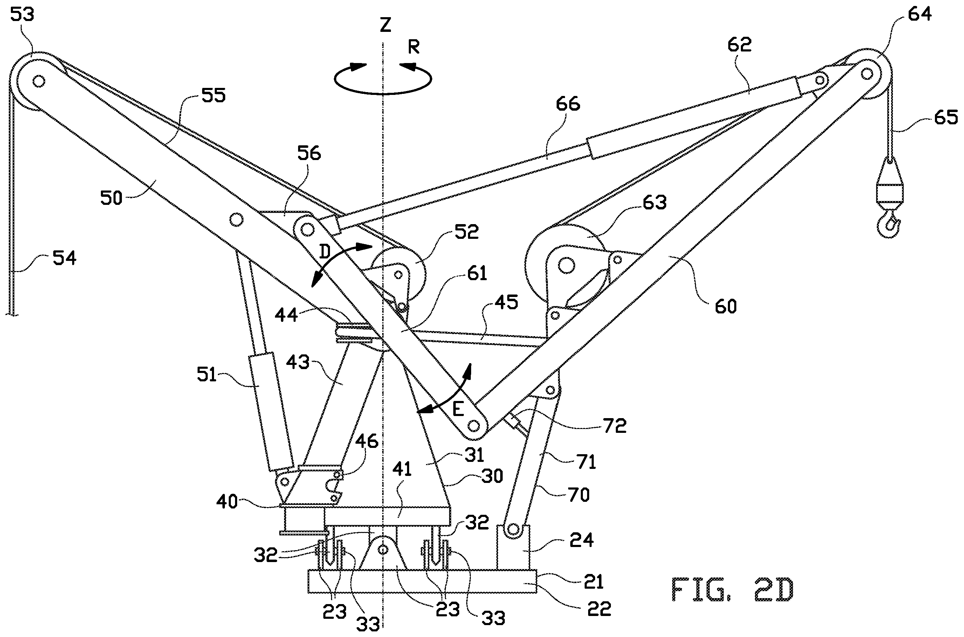

As best shown in figure 2D, subsequently the tension bar 61 and/or the second boom cylinder 62 of the second boom assembly 66 are hingeably connected to the first connector 56 at the first boom 50. This is performed by extending the second boom cylinder 62 so that the tension bar 61 hinges with respect to the second boom 60 in a first tension bar hinge direction D around a first tension bar hinge axis at the hingeable connection between the tension bar 61 and the second boom 60. The first boom assembly 55 and the second boom assembly 66 are configured and positioned with respect to each other such that by hinging the tension bar 61 the proximal end of the tension bar 61 and/or the second boom cylinder 62 is brought into contact with the first connector 56. Prior to or during hinging the tension bar 61 for connecting the tension bar 61 and/or the second boom cylinder 62 to the first boom 50, the position of the first connector 56 can be controlled by hinging the first boom 50 by extending or retracting the first boom cylinder 51, and the position of the first tension bar hinge axis can be controlled by moving or hinging the second boom 60 by extending or retracting the support leg cylinder 72 or by pulling in or paying out the installation support cable 45.

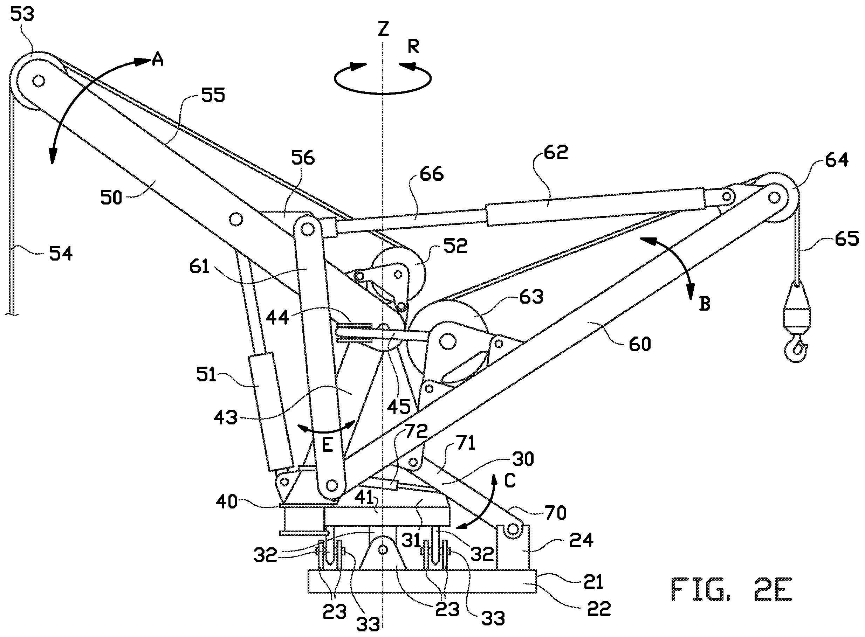

As best shown in figure 2E, subsequently the second boom 60 and/or the tension bar 61 of the second boom assembly 66 are hingeably connected to the second connector 46 at the connecting member 43 of the superstructure 40. This is performed by extending the support leg cylinder 72 so that the tension bar 61 and the second boom 60 hinges with respect to the first boom 50 of the first hoisting crane 100 in a second tension bar hinge direction E around a second tension bar hinge axis at the hingeable connection between the tension bar 61 and the first boom 50. The first boom assembly 55 and the second boom assembly 66 are configured and positioned with respect to each other such that by hinging the tension bar 61 the distal end of the tension bar 61 and/or the second boom 60 is brought into contact with the second connector 46. Prior to or during hinging the tension bar 61 for connecting the tension bar 61 and/or the second boom 60 to the connecting member 43, the position of the second tension bar hinge axis can be controlled by moving or hinging the first boom 50 by extending or retracting the first boom cylinder 51.

As best shown in figure 2F, subsequently the second boom 60 is raised by retracting the second boom cylinder 62 in order to release the distal end of the support leg 71 of the second boom assembly 66 from the installation footing 24 of the support structure 21. Next, the support leg cylinder 72 is retracted to hinge the support leg 71 towards the second boom 60 into a retracted position in which it is substantially parallel and adjacent to the second boom 60. The first hoisting crane 100 and the second boom assembly 66 form the second hoisting crane 200.

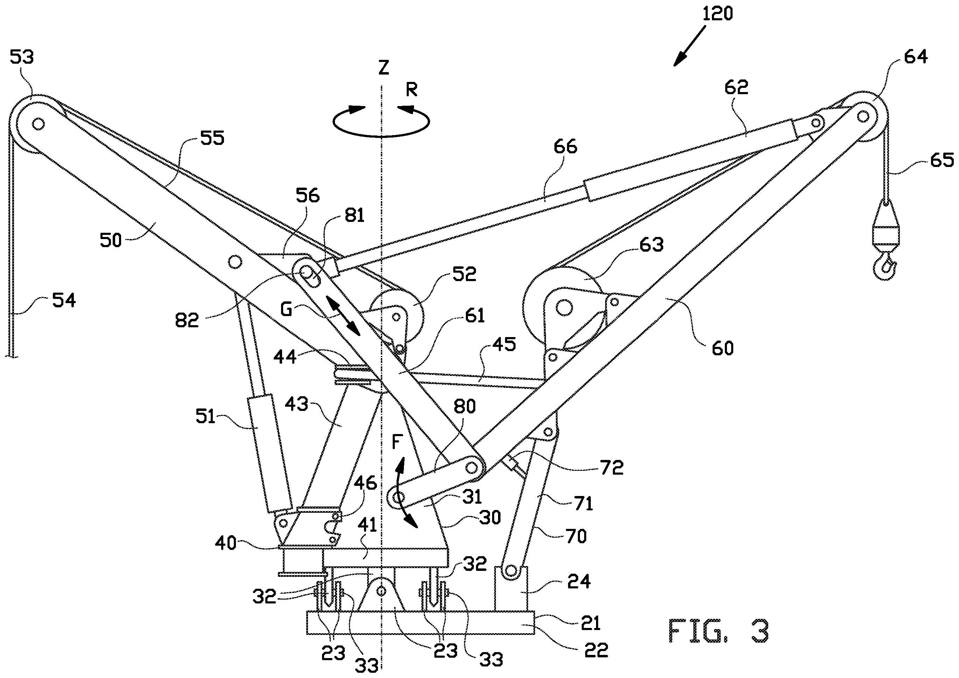

Figure 3 shows a hoisting device 120 according to an alternative embodiment of the invention. The hoisting device 120 is generally the same as the first embodiment as previously described. Reference numbers of identical parts are kept the same, and those parts are therefore not further described below. Reference numbers of new parts are introduced, and those parts are further described below.

The second boom assembly 66 of the hoisting device 120 comprises a rod 80 that is hingeably connected to the second boom 60, in this example at or near the proximal end thereof at the same location as the tension bar 61 is connected to the second boom 60. The rod 80 is hingeable with respect to the second boom 60 in a rod hinge direction F. The second boom assembly 66 may comprises a not shown rod actuator to hinge the rod with respect to the second boom 60. The rod 80 is used to connect the second boom 60 and/or the tension bar 61 of the second boom assembly 66 to the second connector 46 at the connecting member 43 of the superstructure 40. Prior to connecting the rod 80 to the second connector 46 the rod 80 can be hinged with respect to the second boom 60 to align the distal end of the rod 80 with the second connector 46. The rod 80 also further decouples the transfer of horizontal compression force from the tension bar 61 to the first support frame 41 and vertical tension force from the tension bar 61 to the connecting member 43. The rod 80 also allows to align the tension bar 61 with the second slewing bearing to prevent the introduction of additional moment forces in the first boom 60.

The tension bar 61 of the hoisting device 120 comprises a slot or keyhole 81 at the end thereof that is connected to the second boom cylinder 62 and the second boom cylinder comprises pin 82 that extends through the keyhole 81 to form the hinged connection between the tension bar 61 and the second boom cylinder 62. The keyhole 81 allows the tension bar 61 to be moved in a rod moving direction G in its longitudinal direction with respect to the second boom cylinder 62. When the second boom cylinder 62 and/or the tension bar 61 is connected to the first boom 50 the keyhole 81 allows the tension bar 61 to be moved in its longitudinal direction with respect to the first boom 50. Prior to connecting the second boom 60 and/or the tension bar 61 of the second boom assembly 66 to the second connector 46 the tension bar 61 can be moved in its longitudinal direction with respect to the first boom 50 to align the distal end of the rod 80 with the second connector 46.

The hoisting device 120 may comprise only the rod 80, only the keyhole 81, or both the rod 80 and the keyhole 81. When the hoisting device 120 only comprises the keyhole 81, prior to connecting the second boom 60 and/or the tension bar 61 of the second boom assembly 66 to the second connector 46 the tension bar 61 can be moved in its longitudinal direction with respect to the first boom 50 to align the second boom 60 and/or the tension bar 61 with the second connector 46.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Hoisting device (20) for a wind turbine (1), wherein the hoisting device comprises
a support structure (21) to be installed on the wind turbine, a superstructure that is slewable with respect to the support structure (40) around a vertical slewing axis (Z), and
a first boom assembly (55) that has an elongate first boom (50) that is connected to and extends from the superstructure, and a first hoist cable (54) that is suspended from the first boom,
wherein the superstructure and the first boom assembly form a first hoisting crane (100),
wherein the hoisting device comprises a second boom assembly (66) that has an elongate second boom (60), a second hoist cable (65) that is suspended from the second boom, **characterised by** a connecting member for transferring a force or moment between the first boom and the second boom when the connecting member is connected to the first boom and the second boom,
wherein the hoisting device has a first hoisting mode in which the distal end of the first boom extends at a first side of the slewing axis, and the first hoisting crane is configured to hoist a load, or to hoist the second boom assembly into an installation position in which the second boom assembly extends at the first side of the slewing axis and is supported by the support structure,
wherein the hoisting device has an installation mode in which the first hoisting crane is configured to move the distal end of the first boom to a second side of the slewing axis with respect to the second boom assembly while the second boom assembly is in its installation position, and in which the hoisting device is configured to connect the second boom assembly to the first hoisting crane while the distal end of the second boom extends at the first side of the slewing axis and the distal end of the first boom extends at the second side of the slewing axis,
wherein the hoisting device has a second hoisting mode in which the second boom assembly is connected to the first hoisting crane, the distal end of the first boom and the distal end of the second boom extend at opposite sides of the slewing axis , and the connecting member is connected to the first boom and to the second boom, wherein the first hoisting crane and the second boom assembly together form a second hoisting crane (200)

2. Hoisting device according to claim 1, wherein, in the second hoisting mode, the first boom and the second boom are at the proximal ends thereof connected to the superstructure, and the connecting member is respectively connected to the first boom and to the second boom at a distance from the respective proximal ends.

3. Hoisting device according to claim 1 or 2, wherein the connecting member is connected to the second boom at or near the distal end thereof.

4. Hoisting device according to any one of the preceding claims, wherein the connecting member comprises a hydraulic cylinder (62), wherein the hydraulic cylinder is operable to, at least in the installation mode, extend the connecting member towards the first boom, and/or wherein the hydraulic cylinder is operable to, at least in the second hoisting mode, hinge the second boom with respect to the slewing axis.

5. Hoisting device according to any one of the preceding claims, wherein the hoisting device comprises an installation support member that, at least in the installation mode, is connected to the first hoisting crane (100) and the second boom assembly (66) to at least partly support and/or suspend the second boom assembly in its installation position, wherein the installation support member comprises an installation support cable (45), and the hoisting device comprises a support cable guide (44) that is attached to the first hoisting crane, wherein the installation support cable at one end is connected to the support cable guide and at the opposite end is connected to the second boom assembly, wherein the support cable guide is configured to, at least in the installation mode, guide the installation support cable during moving of the first boom between the first side and the second side with respect to the slewing axis.

6. Hoisting device according to any one of the preceding claims, wherein the second boom assembly comprises a support leg (71) that at one end is connected to the second boom and that, at least in the installation mode, at the opposite end rests on the support structure to support the second boom assembly,
wherein the second boom assembly comprises a support leg cylinder (72) between the support leg and the second boom, wherein the support leg cylinder is operable to hinge the support leg with respect to the second boom,
wherein, in the installation mode, the support leg cylinder is operable to hinge the second boom with respect to the first hoisting crane.

7. Hoisting device according to any one of the preceding claims, wherein the second boom assembly comprises a tension bar (61) that is connected to the second boom at a distance from the connecting member, and that is connected to the connecting member at a distance from the second boom,
wherein, in the second hoisting mode, the tension bar is connected to the second boom near the proximal end thereof, and is connected to the connecting member near the first boom,
wherein the tension bar comprises a keyhole (81) and the connecting member comprises a pin (82) that extends through the keyhole to form the connection between the tension bar and the connecting member to allow the tension bar to be moved in its longitudinal direction with respect to the connecting member.

8. Hoisting device according to any one of the preceding claims, wherein the hoisting device comprises a first slewing bearing between the support structure and the superstructure, and a second slewing bearing between the support structure and the superstructure that is spaced apart from the first slewing bearing along the slewing axis,
wherein the first slewing bearing is configured to trans fer radial loads between the support structure and the superstructure, and the second slewing bearing is configured to transfer radial loads and axial loads between the support structure and the superstructure.

9. Hoisting device according to any one of the preceding claims, wherein the first hoisting crane (100) has a first maximum hoist capacity and the second crane (200) has a second maximum hoist capacity that is higher than the first maximum hoist capacity,
wherein the first maximum hoist capacity is in the range of twenty to forty tons, more specifically in the range of twenty five to thirty five tons and/or the second maximum hoist capacity is in the range of fifty to two hundred tons, more specifically in the range of seventy to hundred fifty tons.

10. Hoisting device according to any one of the preceding claims, wherein the second boom assembly comprises a rod (80) that is hingeably connected to the second boom, wherein in the second hoisting mode the second boom is connected to the first hoisting crane by the rod.

11. Method for installing a hoisting device (20) on a wind turbine (1), wherein the hoisting device comprises a support structure (21) to be installed on the wind turbine, a superstructure that is slewable with respect to the support structure around a vertical slewing axis (Z), a first boom assembly (55) that has an elongate first boom (50) that is connected to and extends from the superstructure, and a first hoist cable (54) that is suspended from the first boom, wherein the superstructure and the first boom assembly form a first hoisting crane (100), wherein the hoisting device comprises a second boom assembly (66) that has an elongate second boom (60) a second hoist cable (65) that is suspended from the second boom, and a connecting member for transferring a force or moment between the first boom and the second boom when the connecting member is connected to the first boom and the second boom, **characterised by** the method comprises the steps of: by the first hoisting crane, while the distal end of the first boom extends at a first side of the slewing axis, hoisting the second boom assembly into an installation position in which the second boom assembly extends at the first side of the slewing axis and is supported by the support structure, by the first hoisting crane, moving the distal end of the first boom to a second side of the slewing axis with respect to the second boom assembly while the second boom assembly is or remains in its installation position, connecting the second boom assembly to the first hoisting crane at the first side of the slewing axis while the distal end of the second boom extends at the first side of the slewing axis and the distal end of the first boom extends at the second side of the slewing axis, to form a second hoisting crane (200) that comprises the first hoisting crane and the second boom assembly, and wherein the distal end of the first boom and the distal end of the second boom extend at opposite sides of the slewing axis, and the connecting member is connected to the first boom and to the second boom.

12. Method according to claim 11, wherein the first boom is at the proximal end thereof connected to the superstructure, wherein connecting the second boom assembly to the first hoisting crane comprises connecting the proximal end of the second boom to the superstructure, wherein the connecting member is connected to the second boom at a distance from the proximal end thereof, and wherein connecting the second boom assembly to the first hoisting crane comprises connecting the connecting member to the first boom at a distance from the proximal end thereof.

13. Method according to claim 11 or 12, wherein the connecting member is connected to the second boom at or near the distal end thereof.

14. Method according to any one of claims 11-13, wherein the connecting member comprises a hydraulic cylinder (62),
wherein connecting the second boom assembly to the first hoisting crane comprises operating the hydraulic cylinder to actuate the connecting member towards the first boom to connect the connecting member to the first boom, and/or wherein the hydraulic cylinder is operable to hinge the second boom with respect to the slewing axis.

15. Method according to any one of claims 11-14, wherein the hoisting device comprises an installation support member that, at least when the second boom assembly is in its installation position, is connected to the first hoisting crane and the second boom assembly to at least partly support or suspend the second boom assembly,
wherein the installation support member comprises an installation support cable (45), and the hoisting device comprises a support cable guide (44) that is attached to the first hoisting crane, wherein the installation support cable at one end is connected to the support cable guide and at the opposite end is connected to the second boom assembly, wherein moving the first boom to the second side of the slewing axis with respect to the second boom assembly while the second boom assembly is in its installation position, comprises guiding the installation support cable by the support cable guide.

16. Method according to any one of claims11-15, wherein the second boom assembly comprises a support leg (71) that at one end is connected to the second boom and that, at least in the installation position of the second boom assembly, at the opposite end rests on the support structure to support the second boom assembly,
wherein the second boom assembly comprises a support leg cylinder (72) between the support leg and the second boom, wherein the support leg cylinder is operable to hinge the support leg with respect to the second boom,
wherein, in the installation position of the second boom assembly, the support leg cylinder is operable to hinge the second boom with respect to the first hoisting crane.

17. Method according to any one of claims 11-16, wherein the second boom assembly comprises a tension bar (61) that is connected to the second boom at a distance from the connecting member, and that is connected to the connecting member at a distance from the second boom,
wherein,
when the second boom assembly is connected to the first hoisting crane, the tension bar is connected to the second boom near the proximal end thereof, and is connected to the connecting member near the first boom, and/or the tension bar comprises a keyhole (81) and the connecting member comprises a pin (82) that extends through the keyhole to form the connection between the tension bar and the connecting member to allow the tension bar to be moved in its longitudinal direction with respect to the connecting member, wherein the method comprises, prior to or during connecting the second boom assembly to the first hoisting crane, moving the tension bar in its longitudinal direction with respect to the connecting member.

18. Method according to any one of claims 11-17, wherein the hoisting device comprises a first slewing bearing between the support structure and the superstructure, and a second slewing bearing between the support structure and the superstructure that is spaced apart from the first slewing bearing along the slewing axis,
wherein the first slewing bearing is configured to transfer radial loads between the support structure and the superstructure, and the second slewing bearing is configured to trans fer radial loads and axial loads between the support structure and the superstructure.

19. Method according to any one of claims 11-18, wherein the first hoisting crane (100) has a first maximum hoist capacity and the second hoisting crane (200) has a second maximum hoist capacity that is higher than the first maximum hoist capacity,
wherein the first maximum hoist capacity is in the range of twenty to forty tons, more specifically in the range of twenty five to thirty five tons and/or the second maximum hoist capacity is in the range of fifty to two hundred tons, more specifically in the range of seventy to hundred fifty tons.

20. Method according to any one of claims 11-19, wherein the second boom assembly comprises a rod (80) that is hingeably connected to the second boom, wherein the method comprises, during connecting the second boom assembly to the first hoisting crane, connecting the second boom to the first hoisting crane by the rod,
wherein the method comprises, prior to connecting the second boom to the first hoisting crane by the rod, hinging the rod with respect to the second boom.

## Patentansprüche

1. Hebevorrichtung (20) für eine Windturbine (1), wobei die Hebevorrichtung eine Stützstruktur (21), die an der Windturbine zu installieren ist, eine Superstruktur, die in Bezug auf die Stützstruktur (40) um eine vertikale Schwenkachse (Z) schwenkbar ist, und eine erste Auslegerbaugruppe (55), die einen länglichen ersten Ausleger (50), der mit der Superstruktur verbunden ist und sich davon erstreckt, und ein erstes Hebekabel (54), das an dem ersten Ausleger aufgehängt ist, aufweist, umfasst,
wobei die Superstruktur und die erste Auslegerbaugruppe einen ersten Hebekran (100) bilden,
wobei die Hebevorrichtung eine zweite Auslegerbaugruppe (66), die einen länglichen zweiten Ausleger (60), ein zweites Hebekabel (65), das an dem zweiten Ausleger aufgehängt ist, aufweist, umfasst,
**gekennzeichnet durch** ein Verbindungselement zum Übertragen einer Kraft oder eines Moments zwischen dem ersten Ausleger und dem zweiten Ausleger, wenn das Verbindungselement mit dem ersten Ausleger und dem zweiten Ausleger verbunden ist,
wobei die Hebevorrichtung einen ersten Hebemodus aufweist, in dem sich das distale Ende des ersten Auslegers an einer ersten Seite der Schwenkachse erstreckt, und der erste Hebekran dazu konfiguriert ist, eine Last zu heben oder die zweite Auslegerbaugruppe in eine Installationsposition zu heben, in der sich die zweite Auslegerbaugruppe an der ersten Seite der Schwenkachse erstreckt und durch die Stützstruktur gestützt ist,
wobei die Hebevorrichtung einen Installationsmodus aufweist, in dem der erste Hebekran dazu konfiguriert ist, das distale Ende des ersten Auslegers zu einer zweiten Seite der Schwenkachse in Bezug auf die zweite Auslegerbaugruppe zu bewegen, während die zweite Auslegerbaugruppe in ihrer Installationsposition ist, und in dem die Hebevorrichtung dazu konfiguriert ist, die zweite Auslegerbaugruppe mit dem ersten Hebekran zu verbinden, während sich das distale Ende des zweiten Auslegers an der ersten Seite der Schwenkachse erstreckt und sich das distale Ende des ersten Auslegers an der zweiten Seite der Schwenkachse erstreckt,
wobei die Hebevorrichtung einen zweiten Hebemodus aufweist, in dem die zweite Auslegerbaugruppe mit dem ersten Hebekran verbunden ist, sich das distale Ende des ersten Auslegers und das distale Ende des zweiten Auslegers an gegenüberliegenden Seiten der Schwenkachse erstrecken und das Verbindungselement mit dem ersten Ausleger und mit dem zweiten Ausleger verbunden ist, wobei der erste Hebekran und die zweite Auslegerbaugruppe zusammen einen zweiten Hebekran (200) bilden.

2. Hebevorrichtung nach Anspruch 1, wobei in dem zweiten Hebemodus der erste Ausleger und der zweite Ausleger an den proximalen Enden davon mit der Superstruktur verbunden sind und das Verbindungselement jeweils mit dem ersten Ausleger und mit dem zweiten Ausleger in einem Abstand von den jeweiligen proximalen Enden verbunden ist.

3. Hebevorrichtung nach Anspruch 1 oder 2, wobei das Verbindungselement mit dem zweiten Ausleger an oder nahe dem distalen Ende davon verbunden ist.

4. Hebevorrichtung nach einem der vorhergehenden Ansprüche, wobei das Verbindungselement einen Hydraulikzylinder (62) umfasst, wobei der Hydraulikzylinder bedienbar ist, um zumindest in dem Installationsmodus das Verbindungselement zu dem ersten Ausleger zu erstrecken, und/oder wobei der Hydraulikzylinder bedienbar ist, um zumindest in dem zweiten Hebemodus den zweiten Ausleger in Bezug auf die Schwenkachse zu schwingen.

5. Hebevorrichtung nach einem der vorhergehenden Ansprüche, wobei die Hebevorrichtung ein Installationsstützelement umfasst, das zumindest in dem Installationsmodus mit dem ersten Hebekran (100) und der zweiten Auslegerbaugruppe (66) verbunden ist, um die zweite Auslegerbaugruppe in ihrer Installationsposition zumindest teilweise zu stützen und/oder aufzuhängen, wobei das Installationsstützelement ein Installationsstützkabel (45) umfasst und die Hebevorrichtung eine Stützkabelführung (44) umfasst, die an dem ersten Hebekran angebracht ist, wobei das Installationsstützkabel an einem Ende mit der Stützkabelführung verbunden ist und an dem gegenüberliegenden Ende mit der zweiten Auslegerbaugruppe verbunden ist, wobei die Stützkabelführung dazu konfiguriert ist, zumindest in dem Installationsmodus das Installationsstützkabel während des Bewegens des ersten Auslegers zwischen der ersten Seite und der zweiten Seite in Bezug auf die Schwenkachse zu führen.

6. Hebevorrichtung nach einem der vorhergehenden Ansprüche, wobei die zweite Auslegerbaugruppe ein Stützbein (71) umfasst, das an einem Ende mit dem zweiten Ausleger verbunden ist und das zumindest in dem Installationsmodus an dem gegenüberliegenden Ende auf der Stützstruktur liegt, um die zweite Auslegerbaugruppe zu stützen,
wobei die zweite Auslegerbaugruppe einen Stützbeinzylinder (72) zwischen dem Stützbein und dem zweiten Ausleger umfasst, wobei der Stützbeinzylinder bedienbar ist, um das Stützbein in Bezug auf den zweiten Ausleger zu schwingen,
wobei in dem Installationsmodus der Stützbeinzylinder bedienbar ist, um den zweiten Ausleger in Bezug auf den ersten Hebekran zu schwingen.

7. Hebevorrichtung nach einem der vorhergehenden Ansprüche, wobei die zweite Auslegerbaugruppe eine Zugstange (61) umfasst, die mit dem zweiten Ausleger in einem Abstand von dem Verbindungselement verbunden ist und die mit dem Verbindungselement in einem Abstand von dem zweiten Ausleger verbunden ist,
wobei in dem zweiten Hebemodus die Zugstange mit dem zweiten Ausleger nahe dem proximalen Ende davon verbunden ist und mit dem Verbindungselement nahe dem ersten Ausleger verbunden ist,
wobei die Zugstange ein Schlüsselloch (81) umfasst und das Verbindungselement einen Stift (82) umfasst, der sich durch das Schlüsselloch erstreckt, um die Verbindung zwischen der Zugstange und dem Verbindungselement zu bilden, um zu ermöglichen, dass die Zugstange in ihrer Längsrichtung in Bezug auf das Verbindungselement bewegt wird.

8. Hebevorrichtung nach einem der vorhergehenden Ansprüche, wobei die Hebevorrichtung ein erstes Schwenklager zwischen der Stützstruktur und der Superstruktur und ein zweites Schwenklager zwischen der Stützstruktur und der Superstruktur, das von dem ersten Schwenklager entlang der Schwenkachse beabstandet ist, umfasst,
wobei das erste Schwenklager dazu konfiguriert ist, radiale Lasten zwischen der Stützstruktur und der Superstruktur zu übertragen, und das zweite Schwenklager dazu konfiguriert ist, radiale Lasten und axiale Lasten zwischen der Stützstruktur und der Superstruktur zu übertragen.

9. Hebevorrichtung nach einem der vorhergehenden Ansprüche, wobei der erste Hebekran (100) eine erste maximale Hebekapazität aufweist und der zweite Kran (200) eine zweite maximale Hebekapazität, die höher als die erste maximale Hebekapazität ist, aufweist,
wobei die erste maximale Hebekapazität in der Spanne von zwanzig bis vierzig Tonnen, spezifischer in der Spanne von fünfundzwanzig bis fünfunddreißig Tonnen ist und/oder die zweite maximale Hebekapazität in der Spanne von fünfzig bis zweihundert Tonnen, spezifischer in der Spanne von siebzig bis hundertfünfzig Tonnen ist.

10. Hebevorrichtung nach einem der vorhergehenden Ansprüche, wobei die zweite Auslegerbaugruppe eine Stange (80) umfasst, die schwingbar mit dem zweiten Ausleger verbunden ist, wobei in dem zweiten Hebemodus der zweite Ausleger mit dem ersten Hebekran durch die Stange verbunden ist.

11. Verfahren zum Installieren einer Hebevorrichtung (20) an einer Windturbine (1), wobei die Hebevorrichtung eine Stützstruktur (21), die an der Windturbine zu installieren ist, eine Superstruktur, die in Bezug auf die Stützstruktur um eine vertikale Schwenkachse (Z) schwenkbar ist, eine erste Auslegerbaugruppe (55), die einen länglichen ersten Ausleger (50), der mit der Superstruktur verbunden ist und sich davon erstreckt, und ein erstes Hebekabel (54), das an dem ersten Ausleger aufgehängt ist, aufweist, umfasst, wobei die Superstruktur und die erste Auslegerbaugruppe einen ersten Hebekran (100) bilden, wobei die Hebevorrichtung eine zweite Auslegerbaugruppe (66) umfasst, die einen länglichen zweiten Ausleger (60), ein zweites Hebekabel (65), das an dem zweiten Ausleger aufgehängt ist, und ein Verbindungselement zum Übertragen einer Kraft oder eines Moments zwischen dem ersten Ausleger und dem zweiten Ausleger, wenn das Verbindungselement mit dem ersten Ausleger und dem zweiten Ausleger verbunden ist, aufweist, **dadurch gekennzeichnet, dass** das Verfahren die folgenden Schritte umfasst: durch den ersten Hebekran, während sich das distale Ende des ersten Auslegers an einer ersten Seite der Schwenkachse erstreckt, Heben der zweiten Auslegerbaugruppe in eine Installationsposition, in der sich die zweite Auslegerbaugruppe an der ersten Seite der Schwenkachse erstreckt und durch die Stützstruktur gestützt ist, durch den ersten Hebekran, Bewegen des distalen Endes des ersten Auslegers zu einer zweiten Seite der Schwenkachse in Bezug auf die zweite Auslegerbaugruppe, während die zweite Auslegerbaugruppe in ihrer Installationsposition ist oder bleibt, Verbinden der zweiten Auslegerbaugruppe mit dem ersten Hebekran an der ersten Seite der Schwenkachse, während sich das distale Ende des zweiten Auslegers an der ersten Seite der Schwenkachse erstreckt und sich das distale Ende des ersten Auslegers an der zweiten Seite der Schwenkachse erstreckt, um einen zweiten Hebekran (200) zu bilden, der den ersten Hebekran und die zweite Auslegerbaugruppe umfasst, und wobei sich das distale Ende des ersten Auslegers und das distale Ende des zweiten Auslegers an gegenüberliegenden Seiten der Schwenkachse erstrecken und das Verbindungselement mit dem ersten Ausleger und mit dem zweiten Ausleger verbunden ist.

12. Verfahren nach Anspruch 11, wobei der erste Ausleger an dem proximalen Ende davon mit der Superstruktur verbunden ist, wobei das Verbinden der zweiten Auslegerbaugruppe mit dem ersten Hebekran Verbinden des proximalen Endes des zweiten Auslegers mit der Superstruktur umfasst, wobei das Verbindungselement mit dem zweiten Ausleger in einem Abstand von dem proximalen Ende davon verbunden ist, und wobei das Verbinden der zweiten Auslegerbaugruppe mit dem ersten Hebekran Verbinden des Verbindungselements mit dem ersten Ausleger in einem Abstand von dem proximalen Ende davon umfasst.

13. Verfahren nach Anspruch 11 oder 12, wobei das Verbindungselement mit dem zweiten Ausleger an oder nahe dem distalen Ende davon verbunden ist.

14. Verfahren nach einem der Ansprüche 11-13, wobei das Verbindungselement einen Hydraulikzylinder (62) umfasst, wobei das Verbinden der zweiten Auslegerbaugruppe mit dem ersten Hebekran Betätigen des Hydraulikzylinders umfasst, um das Verbindungselement zu dem ersten Ausleger zu betätigen, um das Verbindungselement mit dem ersten Ausleger zu verbinden, und/oder wobei der Hydraulikzylinder bedienbar ist, um den zweiten Ausleger in Bezug auf die Schwenkachse zu schwingen.

15. Verfahren nach einem der Ansprüche 11-14, wobei die Hebevorrichtung ein Installationsstützelement umfasst, das, zumindest wenn die zweite Auslegerbaugruppe in ihrer Installationsposition ist, mit dem ersten Hebekran und der zweiten Auslegerbaugruppe verbunden ist, um die zweite Auslegerbaugruppe zumindest teilweise zu stützen oder aufzuhängen,
wobei das Installationsstützelement ein Installationsstützkabel (45) umfasst und die Hebevorrichtung eine Stützkabelführung (44) umfasst, die an dem ersten Hebekran angebracht ist, wobei das Installationsstützkabel an einem Ende mit der Stützkabelführung verbunden ist und an dem gegenüberliegenden Ende mit der zweiten Auslegerbaugruppe verbunden ist, wobei das Bewegen des ersten Auslegers zu der zweiten Seite der Schwenkachse in Bezug auf die zweite Auslegerbaugruppe, während die zweite Auslegerbaugruppe in ihrer Installationsposition ist, Führen des Installationsstützkabels durch die Stützkabelführung umfasst.

16. Verfahren nach einem der Ansprüche 11-15, wobei die zweite Auslegerbaugruppe ein Stützbein (71) umfasst, das an einem Ende mit dem zweiten Ausleger verbunden ist und das zumindest in der Installationsposition der zweiten Auslegerbaugruppe an dem gegenüberliegenden Ende auf der Stützstruktur liegt, um die zweite Auslegerbaugruppe zu stützen,
wobei die zweite Auslegerbaugruppe einen Stützbeinzylinder (72) zwischen dem Stützbein und dem zweiten Ausleger umfasst, wobei der Stützbeinzylinder bedienbar ist, um das Stützbein in Bezug auf den zweiten Ausleger zu schwingen,
wobei in der Installationsposition der zweiten Auslegerbaugruppe der Stützbeinzylinder bedienbar ist, um den zweiten Ausleger in Bezug auf den ersten Hebekran zu schwingen.

17. Verfahren nach einem der Ansprüche 11-16, wobei die zweite Auslegerbaugruppe eine Zugstange (61) umfasst, die mit dem zweiten Ausleger in einem Abstand von dem Verbindungselement verbunden ist und die mit dem Verbindungselement in einem Abstand von dem zweiten Ausleger verbunden ist,
wobei, wenn die zweite Auslegerbaugruppe mit dem ersten Hebekran verbunden ist, die Zugstange mit dem zweiten Ausleger nahe dem proximalen Ende davon verbunden ist und mit dem Verbindungselement nahe dem ersten Ausleger verbunden ist, und/oder
die Zugstange ein Schlüsselloch (81) umfasst und das Verbindungselement einen Stift (82) umfasst, der sich durch das Schlüsselloch erstreckt, um die Verbindung zwischen der Zugstange und dem Verbindungselement zu bilden, um zu ermöglichen, dass die Zugstange in ihrer Längsrichtung in Bezug auf das Verbindungselement bewegt wird, wobei das Verfahren vor oder während des Verbindens der zweiten Auslegerbaugruppe mit dem ersten Hebekran Bewegen der Zugstange in ihrer Längsrichtung in Bezug auf das Verbindungselement umfasst.

18. Verfahren nach einem der Ansprüche 11-17, wobei die Hebevorrichtung ein erstes Schwenklager zwischen der Stützstruktur und der Superstruktur und ein zweites Schwenklager zwischen der Stützstruktur und der Superstruktur, das von dem ersten Schwenklager entlang der Schwenkachse beabstandet ist, umfasst,
wobei das erste Schwenklager dazu konfiguriert ist, radiale Lasten zwischen der Stützstruktur und der Superstruktur zu übertragen, und das zweite Schwenklager dazu konfiguriert ist, radiale Lasten und axiale Lasten zwischen der Stützstruktur und der Superstruktur zu übertragen.

19. Verfahren nach einem der Ansprüche 11-18, wobei der erste Hebekran (100) eine erste maximale Hebekapazität aufweist und der zweite Hebekran (200) eine zweite maximale Hebekapazität, die höher als die erste maximale Hebekapazität ist, aufweist,
wobei die erste maximale Hebekapazität in der Spanne von zwanzig bis vierzig Tonnen, spezifischer in der Spanne von fünfundzwanzig bis fünfunddreißig Tonnen ist und/oder die zweite maximale Hebekapazität in der Spanne von fünfzig bis zweihundert Tonnen, spezifischer in der Spanne von siebzig bis hundertfünfzig Tonnen ist.

20. Verfahren nach einem der Ansprüche 11-19, wobei die zweite Auslegerbaugruppe eine Stange (80) umfasst, die schwingbar mit dem zweiten Ausleger verbunden ist, wobei das Verfahren während des Verbindens der zweiten Auslegerbaugruppe mit dem ersten Hebekran Verbinden des zweiten Auslegers mit dem ersten Hebekran durch die Stange umfasst,
wobei das Verfahren vor dem Verbinden des zweiten Auslegers mit dem ersten Hebekran durch die Stange Schwingen der Stange in Bezug auf den zweiten Ausleger umfasst.

## Revendications

1. Dispositif de levage (20) pour une éolienne (1), ledit dispositif de levage comprenant une structure porteuse (21) à installer sur l'éolienne, une superstructure qui peut s'orienter par rapport à la structure porteuse (40) autour d'un axe d'orientation vertical (Z), et
un premier ensemble flèche (55) qui possède une première flèche allongée (50) qui est reliée à la superstructure et s'étend à partir de celle-ci, et un premier câble de levage (54) qui est suspendu à la première flèche,
ladite superstructure et ledit premier ensemble flèche formant une première grue de levage (100),
ledit dispositif de levage comprenant un second ensemble flèche (66) qui possède une seconde flèche allongée (60), un second câble de levage (65) qui est suspendu à la seconde flèche, **caractérisé par** un élément de liaison destiné à transférer une force ou un moment entre la première flèche et la seconde flèche lorsque l'élément de liaison est relié à la première flèche et à la seconde flèche,
ledit dispositif de levage possédant un premier mode de levage dans lequel l'extrémité distale de la première flèche s'étend sur un premier côté de l'axe d'orientation, et ladite première grue de levage étant conçue pour hisser une charge, ou pour hisser le second ensemble flèche dans une position d'installation dans laquelle le second ensemble flèche s'étend sur le premier côté de l'axe d'orientation et est supporté par la structure porteuse,
ledit dispositif de levage possédant un mode d'installation dans lequel la première grue de levage est conçue pour déplacer l'extrémité distale de la première flèche vers un second côté de l'axe d'orientation par rapport au second ensemble flèche pendant que le second ensemble flèche est dans sa position d'installation, et dans lequel le dispositif de levage est conçu pour relier le second ensemble flèche à la première grue de levage pendant que l'extrémité distale de la seconde flèche s'étend sur le premier côté de l'axe d'orientation et que l'extrémité distale de la première flèche s'étend sur le second côté de l'axe d'orientation,
ledit dispositif de levage possédant un second mode de levage dans lequel le second ensemble flèche est relié à la première grue de levage, ladite extrémité distale de la première flèche et ladite extrémité distale de la seconde flèche s'étendant sur des côtés opposés de l'axe d'orientation, et ledit élément de liaison étant relié à la première flèche et à la seconde flèche, ladite première grue de levage et ledit second ensemble flèche formant ensemble une seconde grue de levage (200).

2. Dispositif de levage selon la revendication 1, dans le second mode de levage, ladite première flèche et ladite seconde flèche étant, au niveau de leurs extrémités proximales, reliées à la superstructure, et ledit élément de liaison étant respectivement relié à la première flèche et à la seconde flèche à une distance des extrémités proximales respectives.

3. Dispositif de levage selon la revendication 1 ou 2, ledit élément de liaison étant relié à la seconde flèche au niveau ou à proximité de l'extrémité distale de celle-ci.

4. Dispositif de levage selon l'une quelconque des revendications précédentes, ledit élément de liaison comprenant un vérin hydraulique (62), ledit vérin hydraulique servant à, au moins dans le mode d'installation, étendre l'élément de liaison vers la première flèche, et/ou ledit vérin hydraulique servant à, au moins dans le second mode de levage, articuler la seconde flèche par rapport à l'axe d'orientation.

5. Dispositif de levage selon l'une quelconque des revendications précédentes, ledit dispositif de levage comprenant un élément de support d'installation qui, au moins dans le mode d'installation, est relié à la première grue de levage (100) et au second ensemble flèche (66) pour supporter et/ou suspendre au moins partiellement le second ensemble flèche dans sa position d'installation, ledit élément de support d'installation comprenant un câble de support d'installation (45),
et ledit dispositif de levage comprenant un guide de câble de support (44) qui est fixé à la première grue de levage, ledit câble de support d'installation étant relié, au niveau d'une extrémité, au guide de câble de support et étant relié, au niveau de l'extrémité opposée, au second ensemble flèche, ledit guide de câble de support étant conçu pour, au moins dans le mode d'installation, guider le câble de support d'installation durant le déplacement de la première flèche entre le premier côté et le second côté par rapport à l'axe d'orientation.

6. Dispositif de levage selon l'une quelconque des revendications précédentes, ledit second ensemble flèche comprenant une jambe de support (71) qui est reliée au niveau d'une extrémité à la seconde flèche et qui, au moins dans le mode d'installation, repose au niveau de l'extrémité opposée sur la structure porteuse pour supporter le second ensemble flèche,
ledit second ensemble flèche comprenant un vérin (72) de jambe de support entre la jambe de support et la seconde flèche, ledit vérin de jambe de support servant à articuler la jambe de support par rapport à la seconde flèche,
dans le mode d'installation, ledit vérin de jambe de support servant à articuler la seconde flèche par rapport à la première grue de levage.

7. Dispositif de levage selon l'une quelconque des revendications précédentes, ledit second ensemble flèche comprenant une barre de tension (61) qui est reliée à la seconde flèche à une distance de l'élément de liaison, et qui est reliée à l'élément de liaison à une distance de la seconde flèche,
dans le second mode de levage, ladite barre de tension étant reliée à la seconde flèche à proximité de l'extrémité proximale de celle-ci, et étant reliée à l'élément de liaison à proximité de la première flèche,
ladite barre de tension comprenant un trou de serrure (81) et ledit élément de liaison comprenant une broche (82) qui s'étend à travers le trou de serrure pour former la liaison entre la barre de tension et l'élément de liaison afin de permettre à la barre de tension d'être déplacée dans sa direction longitudinale par rapport à l'élément de liaison.

8. Dispositif de levage selon l'une quelconque des revendications précédentes, ledit dispositif de levage comprenant un premier roulement d'orientation entre la structure porteuse et la superstructure, et un second roulement d'orientation entre la structure porteuse et la superstructure qui est espacé du premier roulement d'orientation le long de l'axe d'orientation,
ledit premier roulement d'orientation étant conçu pour transférer des charges radiales entre la structure de support et la superstructure, et ledit second roulement d'orientation étant conçu pour transférer des charges radiales et des charges axiales entre la structure de support et la superstructure.

9. Dispositif de levage selon l'une quelconque des revendications précédentes, ladite première grue de levage (100) possédant une première capacité de levage maximale et ladite seconde grue (200) possédant une seconde capacité de levage maximale qui est supérieure à la première capacité de levage maximale,
ladite première capacité de levage maximale étant comprise dans la plage de vingt à quarante tonnes, plus spécifiquement dans la plage de vingt-cinq à trente-cinq tonnes et/ou ladite seconde capacité de levage maximale étant comprise dans la plage de cinquante à deux cents tonnes, plus spécifiquement dans la plage de soixante-dix à cent cinquante tonnes.

10. Dispositif de levage selon l'une quelconque des revendications précédentes, ledit second ensemble flèche comprenant une tige (80) qui est reliée de manière articulée à la seconde flèche, ladite seconde flèche étant reliée à la première grue de levage par la tige dans le second mode de levage.

11. Procédé permettant l'installation d'un dispositif de levage (20) sur une éolienne (1), ledit dispositif de levage comprenant une structure porteuse (21) destinée à être installée sur l'éolienne, une superstructure pouvant être orientée par rapport à la structure porteuse autour d'un axe d'orientation vertical (Z), un premier ensemble flèche (55) possédant une première flèche allongée (50) reliée à la superstructure et s'étendant à partir de celle-ci, et un premier câble de levage (54) suspendu à la première flèche, ladite superstructure et ledit premier ensemble flèche formant une première grue de levage (100), ledit dispositif de levage comprenant un second ensemble flèche (66) possédant une seconde flèche allongée (60), un second câble de levage (65) suspendu à la seconde flèche, et un élément de liaison destiné à transférer une force ou un moment entre la première flèche et la seconde flèche lorsque l'élément de liaison est relié à la première flèche et à la seconde flèche, **caractérisé par** le procédé comprenant les étapes de : au moyen de la première grue de levage, pendant que l'extrémité distale de la première flèche s'étend sur un premier côté de l'axe d'orientation, levage du second ensemble flèche dans une position d'installation dans laquelle le second ensemble flèche s'étend sur le premier côté de l'axe d'orientation et est supporté par la structure porteuse, par la première grue de levage, déplacement de l'extrémité distale de la première flèche vers un second côté de l'axe d'orientation par rapport au second ensemble flèche pendant que le second ensemble flèche est ou reste dans sa position d'installation, liaison du second ensemble flèche à la première grue de levage sur le premier côté de l'axe d'orientation, pendant que l'extrémité distale de la seconde flèche s'étend sur le premier côté de l'axe d'orientation et que l'extrémité distale de la première flèche s'étend sur le second côté de l'axe d'orientation, pour former une seconde grue de levage (200) qui comprend la première grue de levage et le second ensemble flèche, et ladite extrémité distale de la première flèche et ladite extrémité distale de la seconde flèche s'étendant sur des côtés opposés de l'axe d'orientation, et ledit élément de liaison étant relié à la première flèche et à la seconde flèche.

12. Procédé selon la revendication 11, ladite première flèche étant, au niveau de son extrémité proximale, reliée à la superstructure, ladite liaison du second ensemble flèche à la première grue de levage comprenant la liaison de l'extrémité proximale de la seconde flèche à la superstructure, ledit élément de liaison étant relié à la seconde flèche à une distance de son extrémité proximale, et ladite liaison du second ensemble flèche à la première grue de levage comprenant la liaison de l'élément de liaison à la première flèche à une distance de son extrémité proximale.

13. Procédé selon la revendication 11 ou 12, ledit élément de liaison étant relié à la seconde flèche au niveau ou à proximité de l'extrémité distale de celle-ci.

14. Procédé selon l'une quelconque des revendications 11 à 13, ledit élément de liaison comprenant un vérin hydraulique (62), ladite liaison du second ensemble de flèche à la première grue de levage comprenant l'actionnement du vérin hydraulique pour actionner l'élément de liaison vers la première flèche afin de relier l'élément de liaison à la première flèche, et/ou ledit vérin hydraulique servant à articuler la seconde flèche par rapport à l'axe d'orientation.

15. Procédé selon l'une quelconque des revendications 11 à 14, ledit dispositif de levage comprenant un élément de support d'installation qui, au moins lorsque le second ensemble flèche est dans sa position d'installation, est relié à la première grue de levage et au second ensemble flèche pour supporter ou suspendre au moins partiellement le second ensemble flèche,
ledit élément de support d'installation comprenant un câble de support d'installation (45), et ledit dispositif de levage comprenant un guide de câble de support (44) qui est fixé à la première grue de levage, ledit câble de support d'installation étant relié, au niveau d'une extrémité, au guide de câble de support et étant relié, au niveau de l'extrémité opposée, au second ensemble flèche, ledit déplacement de la première flèche vers le second côté de l'axe d'orientation par rapport au second ensemble flèche pendant que le second ensemble flèche est dans sa position d'installation, comprenant le guidage du câble de support d'installation par le guide de câble de support.

16. Procédé selon l'une quelconque des revendications 11 à 15, ledit second ensemble flèche comprenant une jambe de support (71) qui est reliée au niveau d'une extrémité à la seconde flèche et qui, au moins dans la position d'installation du second ensemble flèche, repose au niveau de l'extrémité opposée sur la structure porteuse pour supporter le second ensemble flèche,
ledit second ensemble flèche comprenant un vérin (72) de jambe de support entre la jambe de support et la seconde flèche, ledit vérin de jambe de support servant à articuler la jambe de support par rapport à la seconde flèche,
dans la position d'installation du second ensemble de flèche, ledit vérin de jambe de support servant à articuler la seconde flèche par rapport à la première grue de levage.

17. Procédé selon l'une quelconque des revendications 11 à 16, ledit second ensemble flèche comprenant une barre de tension (61) qui est reliée à la seconde flèche à une distance de l'élément de liaison, et qui est reliée à l'élément de liaison à une distance de la seconde flèche,
lorsque le second ensemble flèche est relié à la première grue de levage, ladite barre de tension étant reliée à la seconde flèche à proximité de l'extrémité proximale de celle-ci, et étant reliée à l'élément de liaison à proximité de la première flèche, et/ou
ladite barre de tension comprenant un trou de serrure (81) et ledit élément de liaison comprenant une broche (82) qui s'étend à travers le trou de serrure pour former la liaison entre la barre de tension et l'élément de liaison pour permettre à la barre de tension d'être déplacée dans sa direction longitudinale par rapport à l'élément de liaison, ledit procédé comprenant, avant ou durant la liaison du second ensemble flèche à la première grue de levage, le déplacement de la barre de tension dans sa direction longitudinale par rapport à l'élément de liaison.

18. Procédé selon l'une quelconque des revendications 11 à 17, ledit dispositif de levage comprenant un premier roulement d'orientation entre la structure porteuse et la superstructure, et un second roulement d'orientation entre la structure porteuse et la superstructure qui est espacé du premier roulement d'orientation le long de l'axe d'orientation,
ledit premier roulement d'orientation étant conçu pour transférer des charges radiales entre la structure porteuse et la superstructure, et ledit second roulement d'orientation étant conçu pour transférer des charges radiales et des charges axiales entre la structure de support et la superstructure.

19. Procédé selon l'une quelconque des revendications 11 à 18, ladite première grue de levage (100) possédant une première capacité de levage maximale et ladite seconde grue de levage (200) possédant une seconde capacité de levage maximale qui est supérieure à la première capacité de levage maximale,
ladite première capacité de levage maximale étant comprise dans la plage de vingt à quarante tonnes, plus spécifiquement dans la plage de vingt-cinq à trente-cinq tonnes et/ou ladite seconde capacité de levage maximale étant comprise dans la plage de cinquante à deux cents tonnes, plus spécifiquement dans la plage de soixante-dix à cent cinquante tonnes.

20. Procédé selon l'une quelconque des revendications 11 à 19, ledit second ensemble flèche comprenant une tige (80) qui est reliée de manière articulée à la seconde flèche, ledit procédé comprenant, durant la liaison du second ensemble flèche à la première grue de levage, la liaison de la seconde flèche à la première grue de levage par la tige,
ledit procédé comprenant, avant de relier la seconde flèche à la première grue de levage par la tige, l'articulation de la tige par rapport à la seconde flèche.
